# EUROPÄISCHE PATENTSCHRIFT

(11) **EP 1 657 828 B1**
(45) Veröffentlichungstag und Bekanntmachung des Hinweises auf die Patenterteilung: **28.07.2010**
(21) Anmeldenummer: 05019239.2
(22) Anmeldetag: 05.09.2005
(51) Int. Cl.: H04B 5/00

(54) **Vorrichtung mit einem entlang einer Fahrstrecke bewegbaren Basissystem**
Arrangement with a mobile platform moving along a route
Dispositif avec une plateforme mobile se déplaçant le long d'un parcours

(30) Priorität: 10.11.2004 DE 102004054402
(43) Veröffentlichungstag der Anmeldung: 17.05.2006
(73) Patentinhaber: BEUMER GmbH & Co. KG, 59269 Beckum (DE)
(72) Erfinder: Sliwka, Martin, 59320 Ennigerloh (DE)
(74) Vertreter: Bittner, Thomas L.

(56) Entgegenhaltungen:
- WO-A-01/15275
- DE-A1- 2 628 755
- GB-A- 1 324 180
- US-A- 3 909 757
- US-A- 5 157 393

## Beschreibung

Die Erfindung betrifft eine Vorrichtung mit einem entlang einer Fahrstrecke bewegbaren Basissystem, insbesondere mobile Transporteinrichtung, wobei auf dem bewegbaren Basissystem eine Antenneneinrichtung zum Austauschen von Funksignalen mit entlang der Fahrstrecke angeordneten Funkmitteln vorgesehen ist und wobei die Antenneneinrichtung eine wenigstens einen Antennenabschnitt aufweisende Antenne zum Senden und/oder Empfangen der Funksignale umfaßt.

### Hintergrund der Erfindung

Derartige Vorrichtungen werden in unterschiedlichen Anwendungen beispielsweise als mobile Transporteinrichtung verwendet. Bei dem bewegbaren Basissystem handelt es sich in diesem Fall um ein Transportmittel, beispielsweise einen Wagen oder einen Schlitten, der entlang der Fahrstrecke bewegbar ist. In einem schienengebundenen System wird das bewegbare Basissystem entlang einer Fahrstrecke bewegt, die mit Hilfe von Schienen vorgegeben ist. Beispiele für solche Transportsysteme sind Sortier- und Transportanlagen, die zum Sortieren und/oder Transportieren von Gepäckstücken auf Flughäfen verwendet werden. In ähnlicher Art und Weise werden Behälter auf bewegbaren Schlitten in Brief- oder Paketsortieranlagen bewegt.

Beim Betrieb derartiger Anlagen werden die Bewegungen des bewegbaren Basissystems entlang der Fahrstrecke mit Hilfe von Steuersignalen gesteuert, die drahtlos mit Hilfe von Funksignalen an das bewegbare Basissystem übertragen werden. Hierbei werden die Steuersignale üblicherweise von entlang der Fahrstrecke angeordneten Funkmitteln gesendet und auf dem bewegbaren Basissystem mit Hilfe einer geeigneten Antenne empfangen. Ein an die Antenne auf dem bewegbaren Basissystem gekoppelter Funkkonverter wandelt die empfangenen Signale um, so daß diese für eine weitere Verarbeitung in einer Steuereinrichtung des bewegbaren Basissystems zur Verfügung stehen. Eine häufig genutzte Möglichkeit zur Umsetzung des Funksignalaustausches, insbesondere auch in verzweigten, weitläufigen Schienensystemen, ist das Wireless LAN (WLAN, IEEE 802.11b). Der für die Funksignale genutzte Frequenzbereich liegt üblicherweise zwischen 2,412 GHz und 2,472 GHz, die Wellenlänge λ beträgt zwischen 12,44 cm und 12,16 cm.

Da sich beim Bewegen des bewegbaren Basissystems entlang der Fahrstrecke in praktischen Anwendungen die Umgebungsbedingungen für den Austausch von Funksignalen häufig ändern, beispielsweise aufgrund von Gebäuden oder Gegenständen, die benachbart zur Fahrstrecke angeordnet sind, ist die Freifunktechnologie zur Übertragung der Steuersignale an das bewegbare Basissystem nicht geeignet. Es ist deshalb üblich, entlang der Fahrstrecke Funkmittel zu verteilen, beispielsweise ein strahlendes Koaxialkabel, deren ausgesendete Funksignale auf dem bewegbaren System von speziell angepaßten Richtantennen empfangen werden. Die Richtantennen weisen eine an den jeweiligen Anwendungsfall angepaßte Konstruktion auf, um eine gewünschte Empfangs-/Abstrahlcharakteristik zu erreichen. Neben isotropen Kugelstrahlern mit einer kugelförmigen Abstrahlcharakteristik sind Omni-Antennen mit zylinderförmiger Abstrahlcharakteristik oder Planar-Antennen mit einer gerichteten, keulenförmigen Abstrahlcharakteristik bekannt.

Aus dem Dokument GB 1 324 180 ist ein Fahrzeugkommunikationssystem bekannt, bei dem von einer Antenne auf einem Fahrzeug Funksignale mit einem entlang einer Fahrstrecke angeordneten strahlenden Kabel ausgetauscht werden.

Im Dokument US 5,157,393 ist ein Kommunikationssystem zur Übertragung von Daten zwischen einer Sendeplattform und einer Empfangsplattform offenbart, wobei eine Sendeantenne auf der Sendeplattform mit Hilfe von Antennenabschnitten aus einem strahlenden Kabel gebildet ist, die einen Kreis bilden.

In dem Dokument WO 01/5275 A 1 ist ein System zum Übertragen von elektromagnetischen Signalen erläutert, bei dem eine Antennenanordnung mit Hohneiterstrukturen auf einer mobilen Plattform angeordnet ist, beispielsweise einem Flugzeug, einem Boot oder einem Auto. Mit Hilfe der Hohlleiterstrukturen können über Satellit ausgesendete Signale empfangen werden, beispielsweise Fernsehübertragungen oder Internet-Dienstleistungen.

### Die Erfindung

Aufgabe der Erfindung ist es, eine verbesserte Vorrichtung mit einem entlang einer Fahrstrecke bewegbaren Basissystem anzugeben, bei dem die Antenneneinrichtung mit der Antenne zum Senden und/oder Empfangen von Funksignalen mit vermindertem konstruktiven Aufwand und kostengünstig ausbildbar ist.

Diese Aufgabe wird erfindungsgemäß durch eine Vorrichtung nach dem unabhängigen Anspruch 1 gelöst. Erfindungsgemäß sind weiterhin ein Transportsystem zum Transportieren von Gütern nach dem unabhängigen Anspruch 13 sowie eine Sortieranlage zum Sortieren von Gütern nach dem unabhängigen Anspruch 14 vorgesehen.

Die Erfindung umfaßt den Gedanken, eine Vorrichtung mit einem entlang einer Fahrstrecke bewegbaren Basissystem, insbesondere mobile Transporteinrichtung, vorzusehen, wobei auf dem bewegbaren Basissystem eine Antenneneinrichtung zum Austauschen von Funksignalen mit entlang der Fahrstrecke angeordneten Funkmitteln vorgesehen ist und wobei die Antenneneinrichtung eine wenigstens einen Antennenabschnitt aufweisende Antenne zum Senden und/oder Empfangen der Funksignale umfaßt. Der wenigstens eine Antennenabschnitt ist mittels eines strahlenden Kabels gebildet.

Der wesentliche Vorteil, welcher mit der Erfindung erreicht wird, besteht darin, daß anstelle der im Stand der Technik vorgesehenen, speziell konstruierten Antennen auf dem bewegbaren Basissystem eine Antenne gebildet ist, die zum Senden und/oder Empfangen von Funksignalen über einen Antennenabschnitt verfügt, der mittels eines strahlenden Kabels gebildet ist. Derartige strahlende Kabel sind als solche bekannt und in verschiedenen Ausführungen verfügbar. Es ist eine Möglichkeit geschaffen, die Antennenabschnitte aus einem kostengünstigen Material herzustellen. Strahlende Kabel können darüber hinaus ohne weiteres an unterschiedliche konstruktive Gestaltungen des bewegbaren Basissystems angepaßt werden, indem sie einfach auf dem Basissystem als Kabel verlegt werden. Das Gewicht des als Antennenabschnitt verwendeten strahlenden Kabels ist gegenüber der Masse des Basissystems vernachlässigbar.

Ein Austausch von Funksignalen zwischen der Antenneneinrichtung auf dem bewegbaren Basissystem und den Funkmitteln entlang der Fahrstrecke auf beiden Seiten der Fahrstrecke wird dadurch erreicht, daß die Antenne eine u-förmige Antenne mit zwei im wesentlichen parallel ausgerichteten und miteinander verbundenen Antennenabschnitten ist. Auf diese Weise wird mit einer einzigen Antenne, die hinsichtlich ihrer Form u-förmig gestaltet ist, die Möglichkeit geschaffen, auf beiden Seiten der Fahrstrecke mit dort angeordneten Funkmitteln Signale auszutauschen. Auch wenn entlang der Fahrstrecke nur auf einer Seite Funkmittel vorgesehen sind, hat die Ausführung als u-förmige Antenne den Vorteil, daß das bewegbare System auch bei einer Drehung um 180 Grad mit diesen Funkmitteln Signale austauschen kann, da aufgrund der u-Form der Antenne auf beiden Seiten des bewegbaren Systems ein Antennenabschnitt gebildet ist.

Eine zweckmäßige Ausgestaltung der Erfindung sieht vor, daß das strahlende Kabel ein Kabel mit einem Innenleiter aus einem elektrisch leitenden Material und einer den Innenleiter umgebenden, äußeren Schirmung mit Durchbrüchen ist. Diese Ausgestaltung des strahlenden Kabels ermöglicht eine effiziente Aus-/Einkopplung von Funksignalen.

Der Austausch von Funksignalen zwischen den Funkmitteln entlang der Fahrstrecke und der Antenneneinrichtung auf dem bewegbaren Basissystem wird bei einer Fortbildung der Erfindung dadurch optimiert, daß der wenigstens eine Antennenabschnitt auf dem bewegbaren Basissystem im wesentlichen längs einer Bewegungsrichtung des bewegbaren Basissystems entlang der Fahrstrecke angeordnet ist, was eine verbesserte Überlappung der Sende-/Empfangsbereiche der Funkmittel und der Antenneneinrichtung unterstützt.

Eine mit wenig Aufwand herstellbare u-förmige Antenne ist bei einer zweckmäßigen Ausführungsform der Erfindung dadurch gebildet, daß die u-förmige Antenne durchgehend aus dem strahlenden Kabel gebildet ist. Alternativ kann vorgesehen sein, daß die zwei Antennenabschnitte der u-förmigen Antenne jeweils aus dem strahlenden Kabel gebildet und über ein Verbindungskabel miteinander verbunden sind. Auf diese Weise kann der Übergang zwischen den beiden Antennenabschnitten dem jeweiligen Anwendungsfall entsprechend angepaßt werden, indem ein geeignetes Verbindungskabel gewählt wird. Vorzugsweise ist das Verbindungskabel ein flexibles, koaxiales Kabel, wodurch die Verlegung des Kabels auf dem bewegbaren Basissystem erleichtert wird.

Eine möglichst optimale Ankopplung der Antennenabschnitte auf dem bewegbaren Basissystem an die Funkmittel entlang der Fahrstrecke ist bei einer Fortbildung der Erfindung dadurch erreicht, daß die zwei Antennenabschnitte in äußeren, den Funkmitteln an der Fahrstrecke zugewandten Randbereichen des bewegbaren Basissystems angeordnet sind. Hierdurch wird der Abstand zwischen den Antennenabschnitten auf dem bewegbaren Basissystem und den Funkmitteln möglichst gering gehalten.

Bei der Ausführung des strahlenden Kabels als Kabel mit Innenleiter und äußerer Schirmung mit Durchbrüchen sind die Gruppen der Durchbrüche zweckmäßig entlang der zwei Antennenabschnitte gebildet, wodurch wiederum der Austausch von Funksignalen zwischen den Funkmitteln entlang der Fahrstrecke und der Antenne auf dem bewegbaren System optimiert wird. Bevorzugt ist die Gruppe der Durchbrüche auf eine Gruppe von Durchbrüchen der entlang der Fahrstrecke angeordneten Funkmittel ausgerichtet.

Ein modularer Aufbau der Antenneneinrichtung auf dem bewegbaren Basissystem, was die Anpassung der Antenneneinrichtung an unterschiedliche konstruktive Gestaltungen des bewegbaren Basissystems erleichtert, ist bei einer Weiterbildung der Erfindung dadurch erreicht, daß die Antennenabschnitte der Antenne mit Hilfe einer oder mehrerer Steckverbindungen lösbar verbunden sind.

Eine Ausgestaltung der Erfindung kann vorsehen, daß die Antenneneinrichtung einen an die Antenne gekoppelten Funkkonverter umfaßt. Hierdurch ist die Antenneneinrichtung auf dem bewegbaren Basissystem in der Lage, empfangene Funksignale in digitale Signale und digitale Signale in zu sendende Funksignale umzuwandeln. Die aus empfangenen Funksignalen abgeleiteten, digitalen Signale werden auf dem bewegbaren Basissystem üblicherweise von dem Funkkonverter an eine Steuereinrichtung zur Verarbeitung weitergegeben. Umgekehrt können von der Steuereinrichtung an den Funkkonverter abgegebene, digitale Signale in zu sendende Funksignale umgewandelt und über die Antenne abgestrahlt werden.

Ein Austausch der Antenne und/oder des Funkkonverters wird bei einer bevorzugten Ausführungsform der Erfindung dadurch erleichtert, daß der Funkkonverter mittels eines Steckverbinders an die Antenne lösbar gekoppelt ist.

Zweckmäßig kann eine Ausführungsform der Erfindung vorsehen, daß das bewegbare Basissystem ein schienengebundenes Basissystem ist. Diese Ausgestaltung hat den Vorteil, daß das bewegbare Basissystem entlang der Fahrstrecke mittels Schienen geführt wird, so daß jederzeit ein definierter Abstand zwischen den Funkmitteln entlang der Fahrstrecke und der Antenneneinrichtung auf dem bewegbaren Basissystem aufrechterhalten wird, was eine möglichst fehlerfreie Übertragung der Funksignale unterstützt.

### Ausführungsbeispiele der Erfindung

Die Erfindung wird im folgenden anhand von Ausführungsbeispielen unter Bezugnahme auf eine Zeichnung näher erläutert. Hierbei zeigen:
- Fig. 1: eine schematische Darstellung einer Anordnung mit einem entlang einer Fahrstrecke bewegbaren Basissystem;
- Fig. 2: eine u-förmige Antenne;
- Fig. 3: eine weitere u-förmige Antenne;
- Fig. 4: eine schematische Darstellung eines Abschnitts eines strahlenden Kabels;
- Fig. 5: experimentelle Meßergebnisse für die Übertragung von Funksignalen, wobei die Funksignale auf einem bewegbaren Basissystem mit Hilfe von zwei Omni-Antennen empfangen werden; und
- Fig. 6: experimentelle Meßergebnisse für die Übertragung von Funksignalen, wobei die Funksignale auf dem bewegbaren Basissystem mit Hilfe einer u-förmigen Antenne mit Antennenabschnitten aus einem strahlenden Kabel empfangen werden.

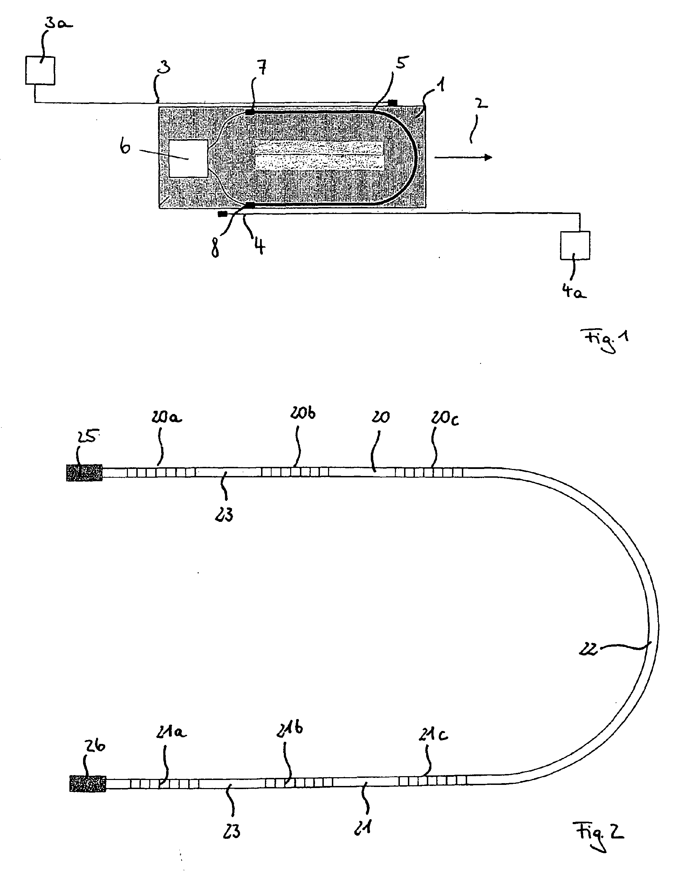

Fig. 1 zeigt eine schematische Darstellung einer Anordnung mit einem bewegbaren Basissystem 1, welches entlang einer Fahrstrecke 2 bewegt werden kann. Bei dem bewegbaren Basissystem 1 handelt es sich beispielsweise um einen Transportwagen oder -schlitten, welcher selbstfahrend mit einem Antrieb ausgestattet sein kann oder entlang der Fahrstrecke 2 gezogen wird. Derartige Anordnungen werden zum Beispiel in Transport-/Sortieranlagen für Gepäckstücke in Flughäfen oder für Postsendungen in Postverteilzentren genutzt. Auch beim innerbetrieblichen Warentransport, innerbetrieblichen Werkstücktransport in Produktionsbetrieben, Palettentransport, bei der Lagertechnik beliebigen Arten von Regalbediengeräten werden solche Anordnungen verwendet.

Entlang der Fahrstrecke 2 sind beidseitig Funkmittel 3, 4 angeordnet, bei denen es sich im dargestellten Ausführungsbeispiel um strahlende Kabel handelt, die längs der Fahrstrecke 2 verlegt sind. Die Funkmittel 3, 4 sind mit einem jeweiligen Verbindungsglied 3a, 4a verbunden, über welches das Funknetz an ein anderes Netzwerk koppelbar ist, beispielsweise ein drahtgebundenes Computernetzwerk. Über die Verbindungsglieder 3a, 4a werden beliebige Steuersignale eingekoppelt, die mit Hilfe der Funkmittel 3, 4 als Funksteuersignale abgestrahlt werden. Diese Funksteuersignale werden von einer u-förmigen Kabelantenne 5 empfangen, die auf dem bewegbaren Basissystem 1 angeordnet ist. An die Kabelantenne 5 ist ein Funkkonverter 6 über Steckverbinder 7, 8 angeschlossen, mit dem die Funksignale in digitale Signale umgewandelt werden. Umgekehrt können von der Kabelantenne 5 auch Funksignale ausgesendet werden, die von den Funkmitteln 3, 4 empfangen und über die Verbindungsglieder 3a, 4a weitergeleitet werden. Es sind verschiedene Systeme für Funkkonverter verfügbar, die vom Fachmann der jeweiligen Anwendung entsprechend ausgewählt werden können.

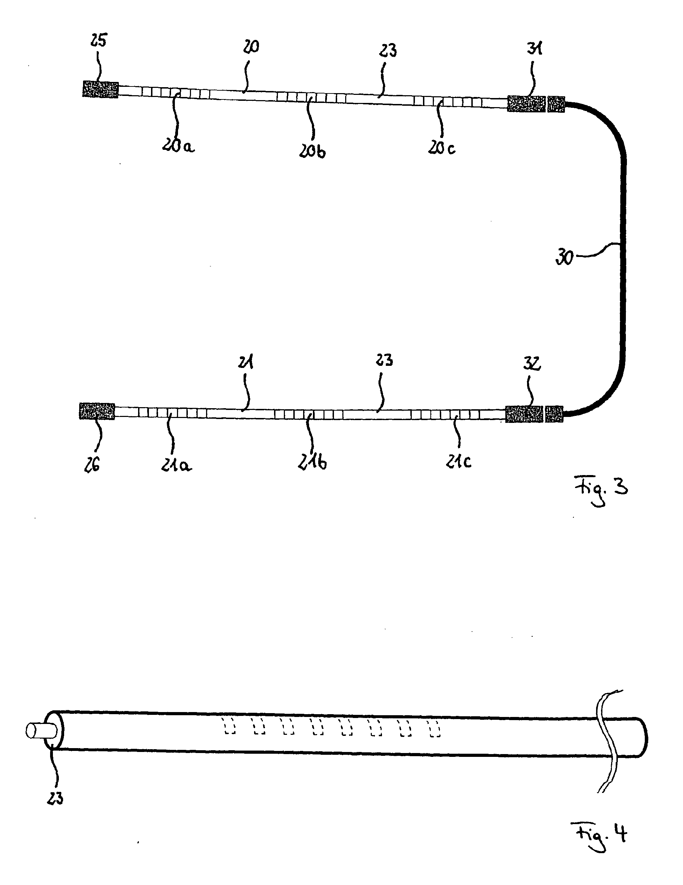

Die u-förmige Kabelantenne 5 ist in den Fig. 2 und 3 in verschiedenen Ausführungsformen im Detail dargestellt. Gemäß Fig. 2 sind zwei Antennenabschnitte 20, 21 über einen Verbindungsabschnitt 22 verbunden, wobei die beiden Antennenabschnitte 20, 21 und der Verbindungsabschnitt 22 einteilig oder mehrteilig aus strahlendem Kabel sind, wobei bei der mehrteiligen Ausführung Abschnitte des strahlenden Kabels mit Steckverbindungen oder Schraubverbindungen lösbar verbunden sind. In den Antennenabschnitten 20, 21 sind jeweils Gruppen von Durchbrüchen 20a, 20b, 20c und 21a, 21b, 21c gebildet. Im Bereich der Gruppen von Durchbrüchen 20a-20c, 21a-21c ist eine äußere Schirmung 23 durchbrochen, so daß Funksignale aus- und eingekoppelt werden können, wie dieses in Fig. 4 detaillierter gezeigt ist. Die Antennenabschnitte 20, 21 enden in einem jeweiligen Stecker 25, 26. Auch im Bereich des Verbindungsabschnitts 22 können Durchbrüche (nicht dargestellt) gebildet sein, insbesondere bei Ausführung der Kabelantenne 5 aus einem strahlenden Kabel.

In Fig. 3 ist eine weitere Ausführungsform für die u-förmige Kabelantenne 5 dargestellt, bei der im Unterschied zu der Ausführungsform nach Fig. 2 die beiden Antennenabschnitte 20, 21 über ein flexibles, koaxiales Verbindungskabel 30 verbunden sind, wobei zwischen den Antennenabschnitten 20, 21 und dem flexiblen Verbindungskabel 30 eine jeweilige Steckverbindung 31, 32 gebildet ist. Während bei der Ausführungsform nach Fig. 2 im Verbindungsabschnitt 22 darauf zu achten ist, daß ein vorgegebener maximaler Krümmungsradius des verwendeten strahlenden Kabels eingehalten wird, besteht bei der weiteren Ausführungsform der u-förmigen Kabelantenne nach Fig. 3 der Vorteil, daß als Verbindungskabel 30 ein koaxiales Kabel ausgewählt werden kann, welches eine gewünschte Flexibilität aufweist, so daß auch kleinere Krümmungsradien gebildet werden können, als dies für das strahlende Kabel möglich wäre.

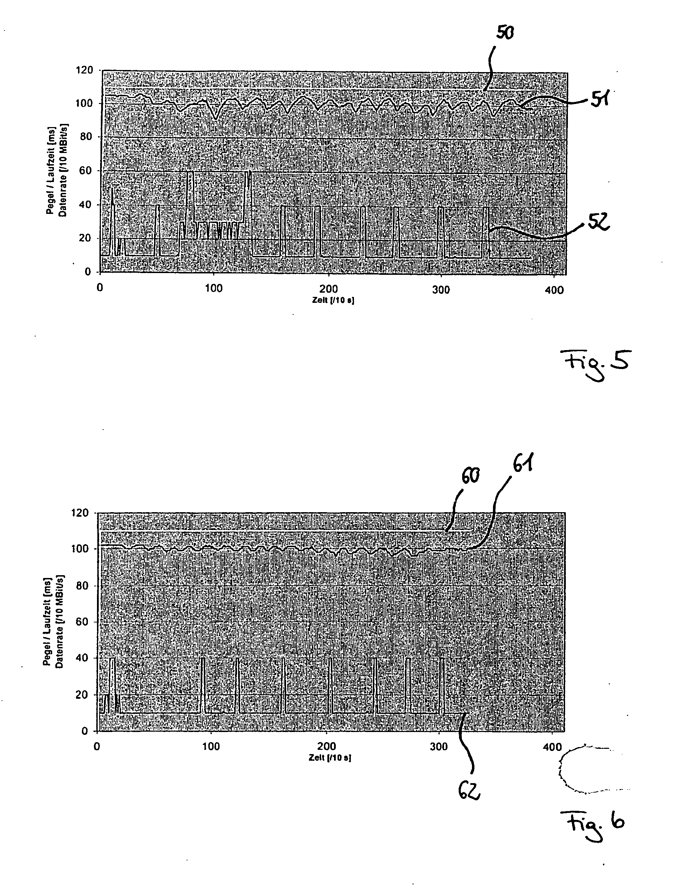

In Fig. 5 sind experimentelle Meßergebnisse für die Übertragung von Funksignalen zwischen sendenden Funkmitteln und zwei Omni-Antennen in einer Anordnung ähnlich zu der in Fig. 1 dargestellt, wobei der Abstand zwischen den Funkmitteln, für die ein strahlendes Kabel verwendet wurde, und den beiden Omni-Antennen 30 mm betrug. Es sind die Datenrate 50, der Signalpegel 51 sowie die Paket- bzw. Stückgutlaufzeit 52 dargestellt. Bei schlechter Funkverbindung gehen Daten verloren, so daß es zu Telegrammwiederholungen und somit zu größeren Paket- bzw. Stücklaufzeiten kommt.

Fig. 6 zeigt experimentelle Ergebnisse für die Übertragung von Funksignalen in einer Anordnung, wie sie schematisch in Fig. 1 dargestellt ist. Der Abstand zwischen der u-förmigen Kabelantenne 5 und den Funkmitteln 3, 4 betrug etwa 30 mm. Es sind der Pegel 60, die Datenrate 61 und die Paketlaufzeit 62 dargestellt. Im Vergleich zu den experimentellen Ergebnissen in Fig. 5 ist zunächst festzustellen, daß die Welligkeit des Pegels 60 deutlich geringer als die Welligkeit des Pegels 50 in Fig. 5 ist. Darüber hinaus ist das Signal für die Paketlaufzeit 62 im wesentlichen nur zyklisch aufgrund der Rechnerleistung erhöht, wohingegen das Signal für die Paketlaufzeit 52 in Fig. 5 auch länger andauernde, erhöhte Paketlaufzeiten aufweist, die auf die Funkübertragung zurückzuführen sind.

Eine Auswertung der experimentellen Meßergebnisse ergab die folgenden Vorteile der u-förmigen Kabelantenne gegenüber der Verwendung der Richtantenne:
- Die Welligkeit entlang des strahlenden Kabels liegt bei einer Antennenlänge, die vier Gruppen von Durchbrüchen aufweist, nur noch bei etwa 5 dB.
- Die Gefahr von lokalen Funklöchern, die durch Reflexionen entstehen, besteht nicht.
- Aufgrund des möglichst gering wählbaren Abstands zwischen strahlendem Kabel und Antenne kann eine geringe Kopplungsdämpfung unter 50 dB erzielt werden.
- Signale von bewegbaren Basissystemen anderer Funkzellen werden auf direktem Wege nur gedämpft empfangen (niedriger Rauschpegel).
- Aufgrund der u-Form der Kabelantenne kann beidseitig mit strahlenden Kabeln kommuniziert werden.
- Roaming-Vorgänge (Funkzellenwechsel) sind wegen der überlappenden Anordnung der strahlenden Kabel fließend möglich.
- Die volle Nutzung der Diversity-Funktion am Funkkonverter ist über eine u-förmige Kabelantenne möglich.
- Es sind keine zusätzlichen Summierer zwecks Zusammenschaltung der Antennen notwendig. Es ist eine direkte Verbindung der beiden Enden der u-förmigen Kabelantenne mit den Eingängen des Funkkonverters über Jumperkabel möglich.
- Die u-förmige Kabelantenne besteht aus preiswerten Komponenten.

## Patentansprüche

1. Vorrichtung mit einem entlang einer Fahrstrecke (2) bewegbaren Basissystem (1), insbesondere mobile Transporteinrichtung, wobei auf dem bewegbaren Basissystem (1) eine Antenneneinrichtung zum Austauschen von Funksignalen mit entlang der Fahrstrecke (2) angeordneten Funkmitteln (3, 4) vorgesehen ist, die Antenneneinrichtung eine wenigstens einen Antennenabschnitt (20, 21) aufweisende Antenne (5) zum Senden und/oder Empfangen der Funksignale umfaßt und der wenigstens eine Antennenabschnitt (20, 21) mittels eines strahlenden Kabels gebildet ist, **dadurch gekennzeichnet, daß** die Antenne (5) eine u-förmige Antenne mit zwei im wesentlichen parallel und in Längsrichtung der Fahrstrecke ausgerichteten und miteinander verbundenen Antennenabschnitten (20, 21) ist, wobei auf beiden Seiten des bewegbaren Basissystems (1) jeweils einer der zwei Antennenabschnitte (20, 21) gebildet ist.

2. Vorrichtung nach Anspruch 1, **dadurch gekennzeichnet, daß** das strahlende Kabel ein Kabel mit einem Innenleiter aus einem elektrisch leitenden Material und einer den Innenleiter umgebenden, äußeren Schirmung (23) mit Durchbrüchen (20a-20c; 21 a-21 c) ist.

3. Vorrichtung nach Anspruch 1 oder 2, **dadurch gekennzeichnet, daß** der wenigstens eine Antennenabschnitt (20, 21) auf dem bewegbaren Basissystem (1) im wesentlichen längs einer Bewegungsrichtung des bewegbaren Basissystems (1) entlang der Fahrstrecke (2) angeordnet ist.

4. Vorrichtung nach Anspruch 1, **dadurch gekennzeichnet, daß** die u-förmige Antenne durchgehend aus dem strahlenden Kabel gebildet ist.

5. Vorrichtung nach Anspruch 1, **dadurch gekennzeichnet, daß** die zwei Antennenabschnitte (20, 21) der u-förmigen Antenne jeweils aus dem strahlenden Kabel gebildet und über ein Verbindungskabel (23) miteinander verbunden sind.

6. Vorrichtung nach Anspruch 5, **dadurch gekennzeichnet, daß** das Verbindungskabel (23) ein flexibles, koaxiales Kabel ist.

7. Vorrichtung nach einem der vorangehenden Ansprüche, **dadurch gekennzeichnet, daß** die zwei Antennenabschnitte (20, 21) in äußeren, den Funkmitteln (3, 4) an der Fahrstrecke (2) zugewandten Randbereichen des bewegbaren Basissystems (1) angeordnet sind.

8. Vorrichtung nach Anspruch 2, **dadurch gekennzeichnet, daß** Gruppen der Durchbrüche (20a-20c; 21 a-21 c) entlang der zwei Antennenabschnitte (20, 21) gebildet sind.

9. Vorrichtung nach einem der vorangehenden Ansprüche, **dadurch gekennzeichnet, daß** die Antennenabschnitte (20, 21) der Antenne mit Hilfe einer oder mehrerer Steckverbindungen lösbar verbunden sind.

10. Vorrichtung nach einem der vorangehenden Ansprüche, **dadurch gekennzeichnet, daß** die Antenneneinrichtung einen an die Antenne (5) gekoppelten Funkkonverter (6) umfaßt.

11. Vorrichtung nach Anspruch 10, **dadurch gekennzeichnet, daß** der Funkkonverter (6) mittels eines Steckverbinders (7, 8) an die Antenne (5) lösbar gekoppelt ist.

12. Vorrichtung nach einem der vorangehenden Ansprüche, **dadurch gekennzeichnet, daß** das bewegbare Basissystem (1) ein schienengebundenes Basissystem ist.

13. Transportsystem zum Transportieren von Gütern, insbesondere schienengebundenes Transportsystem, mit einer Vorrichtung mit einem bewegbaren Basissystem (1) nach einem der vorangehenden Ansprüche und entlang einer Fahrstrecke (2) des bewegbaren Basissystems (1) angeordneten Funkmitteln (3, 4) zum Austauschen von Funksignalen mit einer auf dem bewegbaren Basissystem (1) angeordneten Antenneneinrichtung.

14. Sortieranlage zum Sortieren von Gütern mit einem Transportsystem nach Anspruch 13.

## Claims

1. A device with a base system (1) movable along a route (2), in particular a mobile conveying means, an antenna device being provided on the movable base system (1) for exchanging radio signals with radio means (3, 4) arranged along the route (2), the antenna device comprising an antenna (5) for transmitting and/or receiving the radio signals, which antenna (5) comprises at least one antenna portion (20, 21), and the at least one antenna portion (20, 21) being formed by means of a radiating cable, **characterised in that** the antenna (5) is a U-shaped antenna with two substantially parallel antenna portions (20, 21) connected together and oriented in the longitudinal direction of the route, one of the two antenna portions (20, 21) being formed on each of the two sides of the movable base system (1).

2. The device according to claim 1, **characterised in that** the radiating cable is a cable with an inner conductor of an electrically conductive material and an outer shield (23) surrounding the inner conductor and containing apertures (20a-20c; 21a-21c).

3. The device according to claim 1 or claim 2, **characterised in that** the at least one antenna portion (20, 21) is arranged on the movable base system (1) substantially in a direction of movement of the movable base system (1) along the route (2).

4. The device according to claim 1, **characterised in that** the U-shaped antenna is entirely formed by the radiating cable.

5. The device according to claim 1, **characterised in that** the two antenna portions (20, 21) of the U-shaped antenna are in each case formed by the radiating cable and are connected together by a connecting cable (23).

6. The device according to claim 5, **characterised in that** the connecting cable (23) is a flexible coaxial cable.

7. The device according to any one of the preceding claims, **characterised in that** the two antenna portions (20, 21) are arranged in outer edge areas, facing the radio means (3, 4) on the route (2), of the movable base system (1).

8. The device according to claim 2, **characterised in that** groups of the apertures (20a-20c; 21a-21c) are formed along the two antenna portions (20, 21)

9. The device according to any one of the preceding claims, **characterised in that** the antenna portions (20, 21) of the antenna are connected detachably by means of one or more plug connections.

10. The device according to any one of the preceding claims, **characterised in that** the antenna device comprises a radio converter (6) coupled to the antenna (5).

11. The device according to claim 10, **characterised in that** the radio converter (6) is coupled detachably to the antenna (5) by means of a plug connector (7, 8).

12. The device according to any one of the preceding claims, **characterised in that** the movable base system (1) is a railborne base system.

13. A conveying system for conveying goods, in particular a railborne conveying system, comprising a device with a movable base system (1) according to any one of the preceding claims and radio means (3, 4) arranged along a route (2) of the movable base system (1) for exchanging radio signals with an antenna device arranged on the movable base system (1).

14. A sorting installation for sorting goods, comprising a conveying system according to claim 13.

## Revendications

1. Dispositif avec un système de base (1) pouvant être déplacé le long d'un parcours (2), en particulier équipement de transport mobile, étant donné qu'est prévu sur le système de base mobile (1) un système-antenne pour l'échange de signaux radiotéléphoniques avec des moyens radiotéléphoniques (3, 4) disposés le long du parcours (2), le système-antenne comprend une antenne (5) qui présente au moins une section d'antenne (20, 21) pour l'émission et/ou la réception des signaux radiotéléphoniques, et la ou les sections d'antenne (20, 21) sont formées au moyen d'un câble rayonnant, **caractérisé en ce que** l'antenne (5) est une antenne en forme de U avec deux sections d'antenne (20, 21) essentiellement parallèles et orientées dans le sens longitudinal du parcours et reliées l'une à l'autre, étant donné qu'une des deux sections d'antenne (20, 21) est formée sur chacun des deux côtés du système de base mobile (1).

2. Dispositif selon la revendication 1, **caractérisé en ce que** le câble rayonnant est un câble avec un conducteur interne en un matériau conducteur électrique et une gaine externe (23), enveloppant le conducteur interne, avec des brèches (20a-20c ; 21a-21c).

3. Dispositif selon la revendication 1 ou 2, **caractérisé en ce que** la ou les sections d'antenne (20, 21) sont disposées sur le système de base mobile (1) essentiellement le long d'un sens de mouvement du système de base mobile (1) le long du parcours (2).

4. Dispositif selon la revendication 1, **caractérisé en ce que** l'antenne en forme de U est formée de bout à bout par le câble rayonnant.

5. Dispositif selon la revendication 1, **caractérisé en ce que** les deux sections d'antenne (20, 21) de l'antenne en forme de U sont formées chacune par le câble rayonnant et sont reliées l'une à l'autre par un câble de connexion (23).

6. Dispositif selon la revendication 5, **caractérisé en ce que** le câble de connexion (23) est un câble coaxial flexible.

7. Dispositif selon l'une quelconque des revendications précédentes, **caractérisé en ce que** les deux sections d'antenne (20, 21) sont disposées dans des zones limitrophes externes, orientées vers les moyens radiotéléphoniques (3, 4) du parcours (2), du système de base mobile (1).

8. Dispositif selon la revendication 2, **caractérisé en ce que** des groupes de brèches (20a-20c ; 21a-21c) sont formés le long des deux sections d'antenne (20,21).

9. Dispositif selon l'une quelconque des revendications précédentes, **caractérisé en ce que** les sections d'antenne (20, 21) de l'antenne sont reliées de manière amovible à l'aide d'une ou plusieurs fiches de raccordement.

10. Dispositif selon l'une quelconque des revendications précédentes, **caractérisé en ce que** le système-antenne comprend un convertisseur radiotéléphonique (6) couplé à l'antenne (5).

11. Dispositif selon la revendication 10, **caractérisé en ce que** le convertisseur radiotéléphonique (6) est couplé à l'antenne (5) de manière amovible au moyen d'un connecteur à fiches.

12. Dispositif selon l'une quelconque des revendications précédentes, **caractérisé en ce que** le système de base mobile (1) est un système de base sur rail.

13. Système de transport pour le transport de marchandises, en particulier système de transport sur rail, avec un dispositif comportant un système de base mobile (1) selon l'une quelconque des revendications précédentes et des moyens radiotéléphoniques (3, 4) disposés le long d'un parcours (2) du système de base mobile (1) pour l'échange de signaux radiotéléphoniques avec un système-antenne disposé sur le système de base mobile (1).

14. Installation de triage pour le triage de marchandises avec un système de transport selon la revendication 13.
